# EUROPEAN PATENT APPLICATION

(11) **EP 1 372 322 A1**
(43) Date of publication of application: **17.12.2003**
(21) Application number: 03380142.4
(22) Date of filing: 12.06.2003
(51) Int. Cl.: H04M 1/66, H04M 17/02

(54) **Method for preventing unauthorised connections in telephone lines**

(30) Priority: 14.06.2002 ES 200201382
(71) Applicant: Siemens S.A., 28020 Madrid (ES)
(72) Inventor: Ramirez de ganuza lopez, Antonio, 28020 Madrid (ES)
(74) Representative: Carpintero Lopez, Francisco

(57) **Abstract**

The present invention relates to a method for detecting and verifying the events occurring in a telephone line (2) in order to obtain a greater protection against the possible frauds made in said line by "pirate" terminals that are connected to the line in order to carry out a conversation at no cost or at one lower than is established for the type of call. The method is implemented on a single control module (1) installed in the telephone central (5), which continuously monitors the physical parameters of the line during the entire duration of the connection with a terminal, and verifies all events occurring during said connection with the terminal. Verification of these events involves a bi-directional communication between the terminal (3) and the central (5) during the establishment of the connection or call and during its finalisation where the telephone first informs the electronic control unit of any action that it is about to perform, while during the time of connection an undirectional communication is established from the terminal (3) to the central (5) by means of micro-openings made in the line.

## Description

### OBJECT OF THE INVENTION

The present invention relates to a method for detecting and verifying the events that take place in the telephone line in order to obtain an increased protection against the various frauds committed over said line.

The method described is implemented on a single control unit installed in the central and is meant to detect, control and verify the events taking place in the line, as well as the physical parameters characteristic of the line continuously throughout the entire time of connection between the terminal and the central.

As stated, the object of this invention is mainly applicable in systems comprising telephone terminals and centrals connected by a telephone line.

### BACKGROUND OF THE INVENTION

From among the various fraud mechanisms in telephony systems stand out those made in the telephone line by "pirate" terminals that are connected to the line in order to carry out a conversation at no cost or at one lower than is established for the type of call.

Patents are known that describe devices meant to ensure a certain security level in the line. In this sense, application PCT/DE95/00838 describes a device comprising two modules that are respectively installed in the terminal and in the central. This method is expensive, as it requires installing additional hardware in all the telephone terminals of the station.

Other known solutions simpler than the aforementioned one are the following :
- Application PCT/IB 00/00623 is based on characterising the electrical parameters of the line and the terminal, such as the line voltage and current, the dual-tone multifrequency (DTMF) levels and their duration. In this case, legal calls may be considered as fraudulent calls as in certain centrals there are small variations in the line parameters. It would also be possible to find a fraudulent terminal with the same characteristics as the subscriber terminal, resulting in values being measured on the line that are identical to those obtained with a legal call made with the subscriber terminal.
- US Patent 5930345 relies on sending a combination of DTMF tones after dialling. This combination is generated as a function of the dialled number and is known for each call only by the terminal. As in the case of this patent the terminal generates a code based on DTMF tones to confirm the dialling, this could be confused as an afterdialling (such as in operators requiring to press keys to access various functions). Throughout the communication, additional hardware adds a current variation that can be confused with the variation produced by the voice itself. As current variations may be caused for various reasons, it is possible to interpret variations as frauds when they are not, and vice versa.
- French Patent FR 2765061 is based on the incorporation of a module in series with the line, supposedly next to the subscriber's terminal. In this way, the status of the line is controlled on both sides of this control module, verifying whether there is activity on either end of the module. If a fraud is detected, a signalling device introduces an audible signal in the line to jam the fraudulent communication. The disadvantage of the solution proposed here is that nothing prevents opening the line and connecting another fraudulent terminal, making the call without any jamming, or connecting a terminal in parallel with the line and making a call even in the presence of the noise introduced by the signalling device.

### DESCRIPTION OF THE INVENTION

The object of the invention consists of a method for detecting and verifying the events produced in the telephone line, in the communication between a telephone terminal and its corresponding central office in order to prevent a fraudulent use of said line.

The present invention implements a control method over a single electronic control unit installed in the central office that can monitor several independent lines, depending on the maximum capacity of the rack in which said control unit is located.

The method is based on: a continuous supervision of the events that take place in the line; determination at any instant in time of the line status by measuring physical parameters and, finally, bi-directional communications between the terminal and the central (except in the Watchdog mode described later).

These three combined ideas of the method, when implemented in a single electronic control unit installed in the telephone central, allow interrupting the telephone line when a fraud attempt is detected, as well as storing all fraud attempts in a memory installed in the line monitoring control unit. The functions of said electronic unit according to the present invention are implemented by conventional electronic means.

The decision to interrupt the line can be made according to programmed parameters, locally or from a remote system. In this way it is avoided that the method considers as fraud any perturbations in the line that are within characteristic margins of tolerance for each central. In this way, the control method can be programmed to adapt itself to different types of central and line.

The method taught is implemented on a single electronic control unit located in a rack of the central in series between the line and the terminal, and is powered by the voltage supplied by the central.

Said electronic control unit will monitor the line continuously, detecting the various events that may occur: opening and closing of the line, decadal dialling, DTMF dialling, computation signal, verifying for each one that there is bi-directional communication at the start and end of the connection and that this communication is continuous, as well as verifying the physical parameters of the line.

The terminal informs the electronic control unit of the central of each event, ensuring that the information to be verified arrives before or after the event, as may correspond in each case. For this purpose, the terminal uses the hardware conventionally available in these terminals, without requiring any modification or adaptation of this hardware.

Thus, when the control unit detects an event it will check whether the terminal has informed it of said event. If after a certain time no acknowledgement has been received from the terminal, the line will be cut off for a programmable time, making an entry in the register memory of a fraud detection.

As mentioned before, our method also includes a continuous monitoring of the physical parameters of the line, and specifically of the current values in each branch of the line. Thus, it will be possible to change the detection threshold for unhooking and hanging up as desired, according to the situation and characteristics of the telephone line in order to prevent frauds by current taps.

In addition, it is checked that the current flowing in each branch of the line is identical, with a margin of tolerance, opening the line if these values are not the same.

Likewise, monitoring the voltage and current of the line allows detecting the presence of a device connected in parallel in a fraudulent manner.

As previously mentioned, the continuous monitoring of the events and physical parameters must take place in the various phases of establishing the terminal-central connection listed below. In this way, it is possible to detect frauds in the line at any moment.

Initially the line connection is validated, so that when the control unit detects a current above the unhooking threshold it will await an acknowledgement message from the terminal in a programmable time. If no acknowledgement is received in this time, the control unit will open the line. This acknowledgement message from the terminal is transmitted by the modem included in telephone terminals.

After the line connection is validated the electronic control unit of the central module will verify the line dialling, whether decadal or DTMF.

For this purpose, using its modem the terminal will inform the electronic control unit of the digits to be dialled and that must be validated by the control unit. The control unit will validate the dialling if the message transmitted with the dialled number is the same as the dialling in the line.

If the electronic control unit detects a digit in the line that has not been previously communicated by the terminal it will consider it a fraudulent dialling and will open the line, optionally making an entry of a fraud detection in the register memory.

Validation of the dialling by the electronic control unit ends when the terminal indicates. At this time the system will enter a unidirectional communication mode by the terminal in which only the terminal presence will be confirmed. This mode of communication by the terminal will be referred to in the present description as Watchdog (WD) mode.

Implementation of the WD mode consists of micro-openings made in the line by the terminal which the electronic control unit must detect and implement as an acknowledgement of the terminal presence.

The micro-openings (or WD signals) are made with a variable frequency and number that is known to both devices.

In addition, the electronic control unit will analyse the computation signal (call billing signal) awaiting a later acknowledgement by the terminal with a micro-opening. In this way it is ensured that the terminal has received the computation signal, preventing frauds due to inserting computation filters. These frauds consist of inserting a circuit in the line that eliminates the computation pulses (with frequency 12 or 16 kHz) but allows the voice to pass as its frequency reaches only 3400 Hz.

After a line opening longer than a preset maximum period the electronic control unit will interpret that the call has ended and returns to the initial communication system, awaiting a new closure of the line with its subsequent validation.

The final hang-up opening of the terminal is communicated previously to the control unit in the central so that when this message is received it will require a line opening before a programmable period. If the final opening is not detected after this period the control unit will interpret this as a fraud attempt and will open the line. By this last verification the method ensures that the process has ended correctly and that the terminal continues to be present in the line.

In addition the hang-up opening must be longer than a preset time. If it is shorter than this time, the control unit will not consider it as valid and will open the line and optionally make an entry in the register memory of a fraud attempt.

### DESCRIPTION OF THE DRAWINGS

As a complement of the description being made and in order to aid a better understanding of the characteristics of the invention, according to a preferred example of an embodiment, a single figure is accompanied as an integral part of the description where, for purposes of illustration only and in a non-limiting sense, the following is shown:

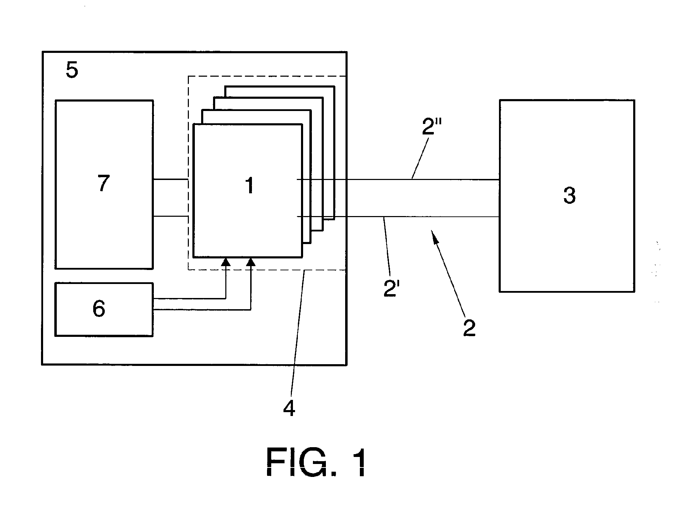

Figure 1 shows a block diagram that represents schematically the connection between a terminal and a central office by the telephone line. Connected in series with the line and in a rack of the central office is the event detection and verification system that we call the electronic control unit. Also shown is the power supply module of the central office and the line card.

### PREFERRED EMBODIMENT OF THE INVENTION

In a preferred embodiment of the invention shown in figure 1, the electronic control unit (1) is located in a telephone central office (5) and connected in series between the line (2) and the terminal (3). However, according to other embodiments of the invention the electronic control unit (1) could also be connected in any sufficiently protected point of the telephone line (2).

Said electronic control unit (1) is installed in a rack (4) with capacity for 8 electronic control units (1), where the connections of each unit to the line (2) and the central (5) are included.

Each electronic control unit (1) has been designed to monitor two independent lines, so that the capacity of the rack will be 16 telephone lines.

The rack (4) of the electronic control units (1) is equipped with a power supply (6) that uses the voltage supplied by the central to generate the voltage required to operate all modules by means of a backplane in the rear of the rack. Figure 1 shows the corresponding card of the central line (7).

Each control unit (1) has the same protection against overcurrents and overvoltages (gas dischargers, polyswitches, varistors, etc.) as those normally used in telephony terminals.

It has been chosen that the bi-directional communications will always be initiated by the terminal (3) with the modem included in all telephone terminals. In this way, the terminal (3) can alert the control unit (1) of the event it is about to or wishes to perform so that it can be validated later. If this is done otherwise only events that have already occurred in the line can be validated, that is, no anticipation is possible.

La control unit (1) responds to each command received from the terminal (3) with an acknowledgement message (ACK) before a programmable time. If the control unit (1) does not receive a valid response before this time, it will resend said message up n times. If finally the acknowledgement (ACK) does not arrive the terminal will hang up.

The communication between the control unit (1) and the terminal (3) is performed in an encrypted manner so that with each initiation of a session the control unit (1), by request of the terminal (3), randomly selects the encryption to be used as well as the initial value of the register. Both modules will use this encryption until the connection ends with the hang-up opening.

As mentioned before, the method object of this invention performs a continuous monitoring of various physical parameters of the line (2). It analyses continuously the current flowing in both branches (2', 2"), as well as the voltage across them. This allows detecting a device clipped in parallel, as the line impedance is changed.

Likewise, this allows detecting any unbalance due to earth taps in the line.

When the control unit (1) detects a current above the unhooking threshold it interprets that the terminal has been unhooked and awaits an acknowledgement message for this action from the terminal (3). If no valid message is received in a programmed time, the control unit (1) opens the line (2). In this way it is possible to detect an invalidated line connection in a programmed time.

After the line (2) connection has been validated the control unit (1) will analyse the dialling in the line, whether decadal or DTMF. For this, when the user enters the digits of the corresponding telephone number, the terminal (3) initially informs the control unit (1) of the digits it will dial and which must be validated by the control unit (1) when the latter receives the dialling eventually. It is only possible to perform the dialling on the line if the digits have been communicated previously to the control unit (1).

If the control unit (1) detects a digit in the line that has not been communicated previously by the terminal (3), it will consider it to be a fraudulent dialling. This prevents diallings not made by the authorised terminal.

Validation of the dialling by the control unit (1) ends when indicated by the terminal (3). After this moment the system initiates a unidirectional communication mode on the part of the terminal (3), in which only its presence will be communicated (Watchdog-WD mode). This unidirectional communication mode (WD) consists of micro-openings in the line (2) that the control unit (1) must detect and interpret as an acknowledgement of the presence of the terminal (3). In this preferred embodiment, the micro-openings have a duration of about 2.5 ms and a variable frequency of under a minute, so that the perturbation of the communication is minimal.

The (WD) signal has a variable number and frequency known to the control unit (1) and the terminal (3).

This mechanism for detecting lack of activity in the line prevents for example replacing an authorised terminal with another one that is not recognised by the central.

In addition, the control unit (1) also analyses the computation signal (for billing the line) and awaits acknowledgement by the terminal (3), thereby ensuring that the terminal (3) receives said computation signal. This prevents computations signals not acknowledged by the terminal (3) that establish billings different from the true one or lack of computation by filtering.

After a line opening longer than a preset time the control unit (1) interprets that the communication has ended and returns to the initial communication system, awaiting a new closure of the line with its subsequent validation.

The final hang-up opening of the terminal (3) is previously communicated to the control unit (1), as when the user hangs up the terminal this does not take place instantaneously; instead, the terminal first informs the control unit (1) of its intention to hang up.

When the control unit (1) receives this message it will require the line to open in a programmed time, opening the line if the opening has not been detected after said time. It also requires the final opening to have a minimum duration to ensure that the previous communication has ended.

In view of this, the method object of the present invention can prevent any type of unauthorised connection to a telephone line. Listed below is the manner in which some of the most common frauds are prevented in accordance with the invention:
- The electronic control unit has line current detectors that will detect if a terminal has tapped the line. If a telephone other than the public telephone is unhooked the control unit will open the line when it does not receive the correct message from the telephone.
- The electronic control unit has detectors for both decadal and multifrequency dialling that will detect the dialling in the line. If this dialling (all or part of it) is made from a different telephone or using a DTMF generator external to the public telephone, the control unit will open the line as no acknowledgement message is received for every digit.
- After validating the dialling the electronic control unit must periodically detect a number of micro-openings in the line produced by the public telephone. If theses micro-openings are not detected or the sequence is not correct, the control unit will open the line, interpreting that it is not the public telephone that has tapped the line.
- The electronic control unit measures the current continuously in the two line wires to detect manipulations of the public telephone that cause a current deviation to earth. As the control unit can measure the absolute current value flowing in each wire of the line, it can detect any variation in the current and any imbalance between the wires.
- If the electronic control unit detects a fraud situation It will open the line. For this the purpose, there is a relay that opens the two wires, ensuring that the current call is cut off.
- To prevent another terminal from simulating communications between the public telephone and the electronic control unit these communications will be encrypted. The micro-openings shall follow an encryption based on their frequency and number.

## Claims

1. Method for preventing unauthorised connections in telephone lines, by which a plurality of telephone terminals are communicated with a telephone central, **characterised in that** it consists of:
continuously verifying from an electronic control unit connected in series with the telephone line all events occurring in the line during communication with a telephone terminal,
continuously monitoring the physical parameters of the line with said electronic control unit,
said event verification being performed by a bi-directional communication between the telephone terminal and said electronic control unit, while the connection with the terminal is established and while the connection is ended,
said bi-directional communication consisting **in that** the telephone first informs the electronic control unit of any action that it is about to perform, so that the control unit will verify that this action is performed afterwards as previously informed by the terminal.

2. Method for preventing unauthorised connections in telephone lines, according to claim 1, **characterised in that** form the moment the connection is established between the telephone terminal and the electronic control unit until the connection ends, the terminal initiates a unidirectional communication towards the electronic control unit by peforming micro-openings of the telephone line so that they can be detected and interpreted by the control unit.

3. Method for preventing unauthorised connections in telephone lines, according to claim 2, **characterised in that** the micro-openings occur with a variable frequency and number, known to the terminal and the electronic control unit.

4. Method for preventing unauthorised connections in telephone lines, according to claim 1, **characterised in that** the electronic control unit is located in any sufficiently protected point of the line, preferably located in the telephone central.

5. Method for preventing unauthorised connections in telephone lines, according to claim 1, **characterised in that** the communication between the terminal and the electronic control unit is performed in an encrypted manner, so that the electronic control unit by request of the terminal will randomly select the encryption to be used.

6. Method for preventing unauthorised connections in telephone lines, according to claim 1, **characterised in that** the verification of the events that occur in the line consists of:
validating the line connection, in which when the electronic control unit detects a current above the unhooking threshold it awaits an acknowledgement message for said action from the terminal,
verifying the dialling, in which the terminal informs the electronic control unit of the digits that it will dial before actually dialling them, and these digits are later verified by the control unit by comparing them to the digits dialled by the terminal,
verifying the hang-up of the terminal, in which the terminal informs the control unit of its intention to open the line before opening the line finally, so that when the control unit receives this communication from the terminal it will verify that the line is opened before a preset time and checks that the line opening has a preset minimum duration.

7. Method for preventing unauthorised connections in telephone lines, according to claim 1, **characterised in that** the continuous monitoring of the physical parameters of the line consists of measuring the electric current flowing in each of the branches (2', 2") of said line and comparing the two currents, and measuring the voltage across the two branches (2', 2").

8. Method for preventing unauthorised connections in telephone lines, according to claim 1, **characterised in that** the electronic control unit analyses the computation signal and awaits an acknowledgement from the terminal that the computation signal has been received, this acknowledgement consisting of one or several micro-openings in the line.
